Europäisches Patentamt

European Patent Office

Office européen des brevets

(19)

(11) **EP 0 408 232 B1**

(12) **EUROPEAN PATENT SPECIFICATION**

(45) Date of publication and mention
of the grant of the patent:
**10.12.1997 Bulletin 1997/50**

(51) Int Cl.⁶: **G06T 15/50**

(21) Application number: **90307232.0**

(22) Date of filing: **02.07.1990**

(54) **Spatial augmentation of vertices for level of detail transition**

Räumliche Scheitelerhöhung für den Übergang von Detailniveaus

Augmentation spatiale de sommets pour la transition de niveaux de détail

(84) Designated Contracting States:
**DE FR GB IT**

(30) Priority: **10.07.1989 US 377687**

(43) Date of publication of application:
**16.01.1991 Bulletin 1991/03**

(73) Proprietor: **GENERAL ELECTRIC COMPANY**
**Schenectady, NY 12345 (US)**

(72) Inventors:
- **Piazza, Thomas Arpad**
 **Port Orange, Florida 32127 (US)**
- **Pelham,,Anthony John**
 **Port Orange, Florida 32127 (US)**
- **Economy, Richard**
 **Ormond Beach, Florida 32174 (US)**

- **Quick, Lee Tanya**
 **Ormond Beach, Florida 32174 (US)**

(74) Representative: **Goode, Ian Roy et al**
**London Patent Operation**
**General Electric International, Inc.,**
**Essex House,**
**12-13 Essex Street**
**London WC2R 3AA (GB)**

(56) References cited:
**EP-A- 0 137 233        US-A- 4 646 251**

- **THE COMPUTER JOURNAL. vol. 29, no. 4,**
 **August 1986, LONDON GB pages 373 - 377;**
 **WISEMAN ET AL.: 'COMPUTING RANDOM**
 **FIELDS'**

## Description

This invention relates to spatial augmentation of vertices for level of detail transition, and, more particularly, to a method for obtaining smooth transformation between effective levels of detail by creating new vertices in response to predetermined data descriptors.

Typically, objects to be displayed in a scene of a computer image generation (CIG) system are represented by edges of polygons, or faces, the vertex descriptors of which are stored in a data base. Some form of transition between levels of detail (LOD's) for representing objects to be displayed in CIG systems is also generally used. LOD's enable objects that are more distant from a viewpoint to be represented by fewer edges or polygons, thereby conserving computing resources for closer objects which typically require more detail and correspondingly more edges in order to be accurately and realistically represented. Transitions between LOD's occur at respective predetermined ranges, or zones or regions, from a viewpoint with each lower, or more distant LOD, having correspondingly fewer edges assigned to corresponding features and therefore less detail for objects to be displayed.

In early CIG systems, transition from one LOD to another LOD occurred at respective predetermined ranges from a viewpoint and would be abrupt when the predetermined range was reached. Inasmuch as the human perception system is very sensitive to abrupt transition, this effect during image presentation was distracting and detracted from the goal of achieving realism.

Such a CIG system is known from US-A-4 646 251 where a parallel processor arrangement is used for a fast computation of refined control points from an initial control point distribution, thereby generating a refined polygon structure. The process of US-A-5 646 251 is recursive so that further levels of subdivision expeditiously lead to greater refinement of the generated image.

The development of translucent face capability for CIG systems made possible a significant improvement in implementation of transitions between LOD's. For example, an LOD transition translucency control factor applicable to each LOD at the transition zone between adjacent LOD's, and that monotonically increases from 0 to 1 (0 percent to 100 percent) at a predetermined rate in response to the change in range as an observer moves toward a scene can be used to control the translucency of faces from from adjacent LOD's. The translucency control factor determines the translucency of a face, from opaque at 0 to transparent at 1 with proportionate fractional values of translucency in between. At the proximate boundary of the transition zone the coarse terrain faces of the lower detail LOD are opaque (control factor = 0) and the fine terrain faces of the higher detail LOD are transparent (control factor = 1). Continuing across the transition zone, a point is reached at which the coarse LOD faces have a translucency of x, say 25%, and the fine LOD faces have a translucency of (1-x) say 75%. In progressing through the transition zone, some point will be reached at which the coarse and fine LOD faces each have a translucency of 50%. At the remote boundary of the transition zone the fine LOD faces will be transparent and the coarse LOD faces will be opaque.

Although translucency blending during LOD transition is an improvement over abrupt switching of LOD information, there are still cases where translucency blending does not provide accurate and/or unambiguous results. For instance, if the fine LOD contains a peak of terrain that extends above the terrain of the coarse LOD and a feature, such as a vehicle, is spatially defined to be behind the peak of fine terrain, then at the 50-50 percent of translucency transition, the scene will show the feature as a blend of 50% feature definition (faces) and 50% terrain definition (faces), thus making the feature appear to be in front of the terrain even though spatially it was defined to be behind the terrain. This effect is known as bleedthrough.

In another example, it is sometimes required to determine when a collision between objects occurs. If, for example a vehicle is represented by faces with one percent translucency and a feature that is a potential target for a collision is represented by 99 percent translucency, then although the feature will not be visible to the observer, a collision between the vehicle and the feature will be detected.

Other potential deficiencies include inability to provide a face from either one LOD or the other that validly represents vehicle position and attitude at all points in the transition zone between LOD's, and inefficiency in computer processing because all faces in the transition zone from both LOD's must be processed to determine proper assignment of subpixel color and texture modulation for ultimate display.

It would be desirable to provide a method for overcoming position, attitude and collision ambiguities, bleedthrough effects, subpixel processing inefficiencies caused by having multiple polygon groups (one from each adjacent LOD) representing a single object, and other deficiencies that may be associated with prior CIG systems during LOD transitions. In addition it would be desirable to achieve smooth LOD transition without resort to translucency blending.

Accordingly, there is disclosed herein a method for eliminating position, attitude and collision ambiguities, bleedthrough effects, subpixel processing inefficiencies caused by having multiple polygon groups representing a single object, and other deficiencies that may be associated with prior CIG systems caused by LOD transitions during image presentation. The method provides for creating desired finer detail from predefined coarser data for effective smooth LOD transitions, without resort to translucency blending. Smooth LOD transition is achieved by generating finer detail than is available from predefined data without having to predefine and/or store most of the finer detail.

The invention is set out in claims 1 and 17.

The invention, both as to organization and method of operation, together with further objectives and advantages thereof, may best be understood by reference to the detailed description taken in connection with the accompanying drawing, in which:

Fig. 1 is plan view of a basis polygon subdivided in accordance with the present invention.

Fig. 2 is a representative edge of the polygon of Fig. 1 looking in the direction of the arrows of line 2-2 referenced to an xyz orthogonal axis system and including a deviation factor for forming additional vertices in accordance with the present invention.

Figs. 3A and 3B are a perspective view of the basis polygon of Fig. 1 showing derived vertices in accordance with the present invention.

Fig. 4 is a schematic diagram of the basis polygon of Fig. 1 subdivided in response to predetermined ranges from a viewpoint in accordance with the present invention.

Fig. 5 is a hardware block diagram in accordance with the present invention.

Fig. 6 is a logic flow diagram of a computer program useful with the present invention.

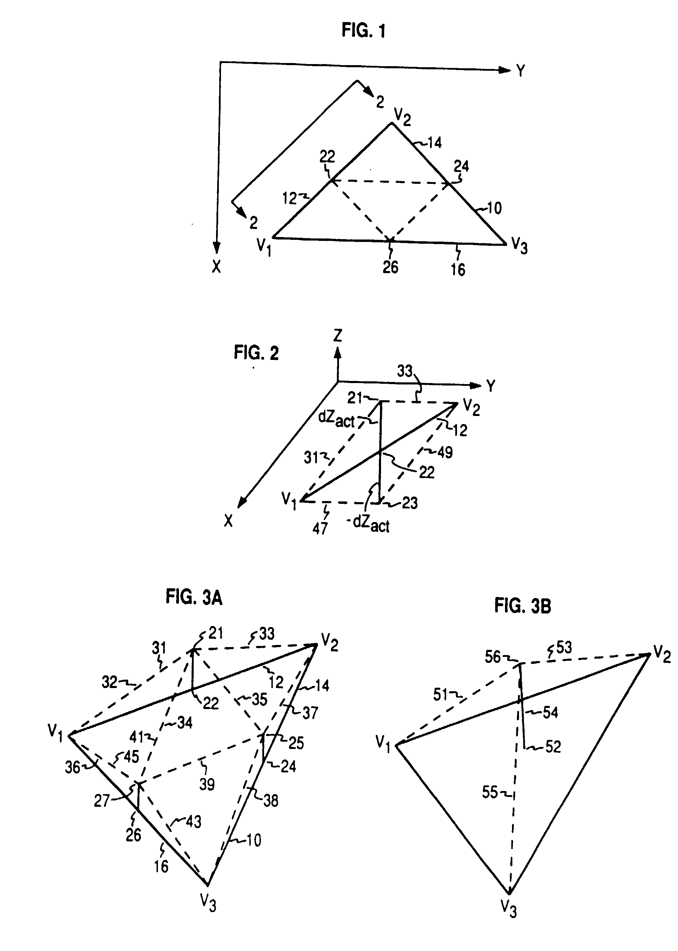

Referring to Fig. 1, a basis polygon 10, represented as a triangle, includes vertices $V_1$, $V_2$ and $V_3$. Of course, this invention is not limited by the shape or number of sides of polygon 10, even though some CIG systems use only convex polygons for avoiding processing ambiguities. Polygon 10, including edges 12, 14 and 16 thereof, is used to define features of a scene to be displayed by a CIG system. Spatial orthogonal three-axis system polygon descriptors, typically referenced to an orthogonal three-axis global system, are stored in a data base having a bulk storage medium, such as magnetic tape or disk. Generally, the polygon descriptors include x, y, z components of the vertices, along with other information such as color, texture and translucency for each polygon.

Basis polygon 10 may be considered as a polygon of the lowest or least detailed LOD. Polygon 10 includes side 12 extending between vertices $V_1$ and $V_2$, side 14 extending between vertices $V_2$ and $V_3$, and side 16 extending between vertices $V_1$ and $V_3$. Breakpoints 22, 24, and 26 may be the mid-points of sides 12, 14 and 16, respectively, or may be a predetermined fixed or random distance from a respective vertex in a clockwise or counterclockwise direction around polygon 10. That is, for a clockwise direction around polygon 10, breakpoint 22 may be determined with respect to $V_1$, breakpoint 24 with respect to $V_2$ and breakpoint 26 with respect to $V_3$.

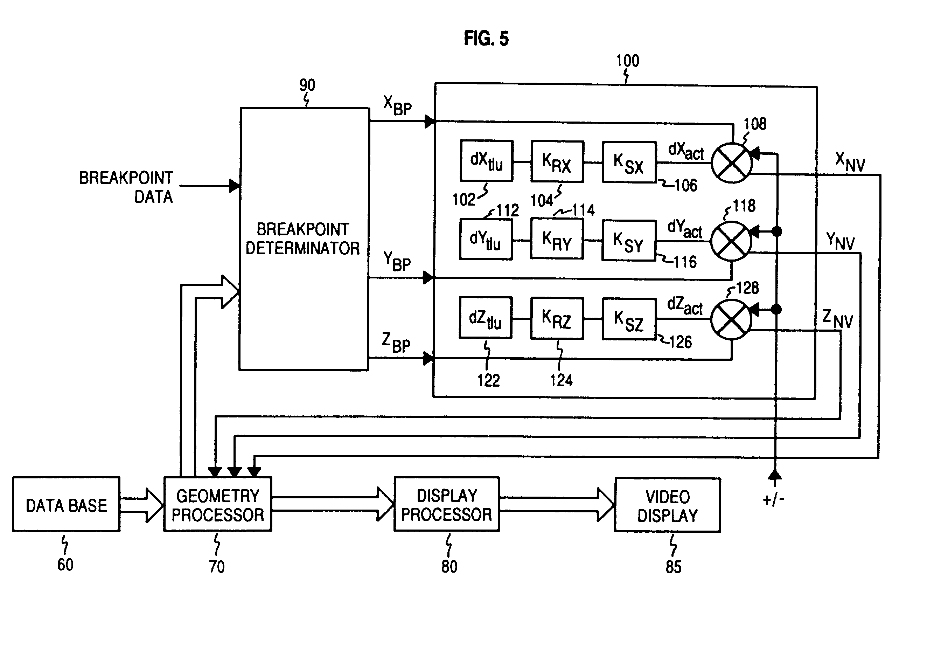

Also shown for reference in Fig. 1 are the x and y axes of an orthogonal three-axis coordinate system with the origin at 0. The third or z-axis is perpendicular to the figure at origin 0 and is shown in Fig. 2. The x, y and z coordinates of vertices $V_1$, $V_2$ and $V_3$, from which the x, y and z coordinates of break points 22, 24 and 26 are readily determinable, are available from a data base 60 (Fig. 5). For example, when breakpoint 22 constitutes the midpoint of side 12, then the x, y and z coordinates of breakpoint 22 are the average of the sum of the respective x, y and z coordinates of vertices $V_1$ and $V_2$, which are also the end points of side 12 of polygon 10 on which breakpoint 22 lies. The x, y and z coordinates for breakpoints 24 and 26 may likewise be determined from the coordinates of $V_2$ and $V_3$ for breakpoint 24, and from the coordinates of $V_3$ and $V_1$ for breakpoint 26.

When a breakpoint is not the mid-point of a side of a polygon, the coordinates of the breakpoint may be readily determined from the coordinates of the vertices of the end points of the side on which the breakpoint lies and the distance of the breakpoint from one of the vertices, using basic algebra, trigonometry and/or analytic geometry. Such processing may include, for example, programming a general purpose computer for determining the equation of a line (side) in three dimensions from the coordinates of the end points (vertices) of the line, and then determining the coordinates of a point (breakpoint) on the line (side) that is disposed at a predetermined distance from one of the end points (vertices) of the line (side).

Breakpoints 22, 24 and 26 are shown interconnected by a series of dashed lines starting at one breakpoint and proceeding in a clockwise or counterclockwise direction until a closed polygon is obtained.

Referring to Fig. 2, a view looking in the direction of the arrows of line 2-2 of Fig. 1 is shown. For convenience and to avoid undue repetition and clutter, only side 12 and treatment of breakpoint 22 is shown, it being understood that other breakpoints may be treated analogously.

As shown in Fig. 2, a deviation or perturbation value $dz_{act}$ is added or subtracted ($-dz_{act}$) from the z coordinate value of breakpoint 22 to form a derived vertex 21 when $dz_{act}$ is added to, or a derived vertex 23 when $dz_{act}$ is subtracted from, the z coordinate value of breakpoint 22. In the example shown, only the z coordinate of breakpoint 22 is modified, it being recognizable by one of ordinary skill in the art that any combination or permutation of modifications to the x, y and z components of each breakpoint independent of the modifications applied to each other breakpoint may be performed as desired in accordance with the teachings of the present invention for forming derived vertices. Thus, vertices 21 and 23 have the same x and y components as does breakpoint 22 with the z component modified by the value of $dz_{act}$.

The value of $dz_{act}$ may be determined in accordance with the following equation:

$$dz_{act} = dz_{tlu} {}^*K_{rz} {}^*K_{sz},$$

wherein $dz_{tlu}$ is a base deviation value that may be obtained from a table look-up, $K_{rz}$ is a convergence factor having a value from 0 to 1 that varies continuously as a function of the breakup criteria and $K_{sz}$ is a scaling factor that ensures that the value of $dz_{act}$ does not exceed the value of maximum deviation $dz_{max}$. The value of $dz_{max}$ may be determined in response to the length of the side of a polygon on which the breakpoint being modified is situated for ensuring that the value of $dz_{act}$ presents an acceptable image when displayed, as may be determined by one of ordinary skill in the art without undue experimentation. Scaling factor $K_{sz}$ is only required when $dz_{tlu}$ is a random deviation and may be set equal to one for all other cases. The value of $dz_{act}$ may be zero. For example, if polygon 10 abuts a cultural feature such as a road, then it may be desirable to supply a deviation $dz_{act}$ of zero to one or more breakpoints to avoid break-up of the cultural feature.

Inasmuch as the z-axis is generally defined to be vertical with the x and y axes perpendicular thereto and to each other as well, a vertex created by the addition of $dz_{act}$ to the z coordinate of a breakpoint may be used to represent changes in elevation above a nominal elevation, such as rolling terrain, hills and valleys, while a vertex created by the subtraction of $dz_{act}$ from the z coordinate of a breakpoint may be used to represent relief in the terrain, such as a depression or crater.

It is noted that regardless of whether the value of $dz_{act}$ is added to, or subtracted from, the z component of breakpoint 22, new vertex 21 or 23 and two new edges 31 and 33, or two new edges 47 and 49, respectively, as indicated by dashed lines from new vertex 21 or 23 to the end points $V_1$ and $V_2$ of edge 12 are obtained without having been previously defined or stored. Further, it is possible to determine the coordinate values of new vertices 21 or 23 in real time, thereby facilitating image generation. Adding $dz_{act}$ to the z component of breakpoint 22 also removes the derived polygon as determined by breakpoints 22, 24 and 26 (Fig. 1) from the plane of basis polygon 10 (Fig. 1).

Although the present invention may be beneficially applied to features that generally do not require specific detail definition, such as terrain and bodies of water, it may be used to generate non-specific fine detail wherever such fine detail may be required or desired, without having to have previously determined or stored the fine detail when statistical data such as random or pseudo-random deviations are used. In addition, deterministic data, that is data representing a specific or generic feature such as mountains, valleys and forests but not necessarily any particular real world feature, can be used to represent highly accurate images of the features. Another benefit of the present invention is that as the field of view changes, the fine detail that is generated in accordance with the present invention may be discarded without storing when the feature falls outside the field of view and may be later recreated should the feature again come within the field of view.

The potential values for $dz_{tlu}$ may be determined and stored in a table look-up to be accessed by a code that is associated with each edge of basis polygon 10 (Fig. 1) and that is stored in the data base. If actual or deterministic data are used then some but not all data must be stored in the data base, such as elevation (z) but not x and y data which may be calculated. The code ensures that the same address is always selected for the edge. According to the type of terrain or feature being simulated, the value of each $dz_{tlu}$ may be: a random or pseudo-random value; a predetermined constant; derived from real data, such as Defense Mapping Agency data; periodically changing, such as a sinusoidal function, for simulating, for example, waves in a body of water. More important than the actual source of values for $dz_{tlu}$ is that the image ultimately displayed appear to be realistic. It is well within the ability of one of ordinary skill in the art to select the type of deviation and values-or $dz_{tlu}$ that are suited for specific applications in accordance with the teachings of the present invention.

Referring to Fig. 3A, a perspective view of basis polygon 10 of Fig. 1 having derived vertices in accordance with the present invention is shown. Derived vertices 21, and 27 correspond to breakpoints 22, 24, 26 respectively, with respective deviation values added to the z-components thereof.

New edges 31 and 33 from derived vertex 21, new edges 37 and 38 from derived vertex 25, and new edges 43 and 45 from derived vertex 27 are indicated by dashed lines from the corresponding derived vertex to the end points of the side of basis polygon 10 on which the breakpoint corresponding to the derived vertex lies. Derived vertices 21, 25 and 27 are shown interconnected in a clockwise or counterclockwise direction starting with one of the derived vertices by dashed lines 35, 39 and 34 that form the sides of a closed derived polygon having vertices 21, 25 and 27. Inasmuch as the coordinates of the derived vertices are known, each of four derivative polygons, defined by vertex triples $V_2$, 21 and 25; $V_1$, 21 and 27; $V_3$, 25 and 27; 21, 25 and 27, may be processed for forming finer detail than is available from basis polygon 10 for visual images. Such processing is analogous to processing which occurs for polygon descriptors that are obtained from the data base.

If desired, the derivative and derived polygons of Fig. 3A may be further subdivided for obtaining even finer detail. For instance, breakpoints 32, 34 and 36 are indicated on sides 31, 41 and 45 of one of the derivative polygons. Breakpoints may be similarly located on the sides of the other derivative and derived polygons and processing analogous to that used for the initial derived polygon obtained from basis polygon 10 may be employed.

Referring to Fig. 3B, another embodiment for augmenting vertices in accordance with the present invention is shown. Point 52 represents a point lying within basis polygon 10. Point 52 may lie on an edge of basis polygon 10 if desired which is also considered to be within basis polygon 10. A deviation value 54 is combined with coordinate component values of point 52 for locating a derived vertex 56 lying outside the plane of basis polygon 10. Derived vertex 10 is shown connected to each vertex $V_1$, $V_2$ and $V_3$ of basis polygon 10 by dashed lines 51, 53 and 55, respectively. Derivative polygons described by vertex triples $V_1$, $V_2$, 56; $V_2$, $V_3$, 56 and $V_3$, $V_1$, 56 may be processed for generating finer detail than is available from processing basis polygon 10. It is noted that when derived vertex 56 is connected to each vertex $V_1$, $V_2$ and $V_3$ of basis polygon 10 the number of derivative polygons is equal to the number of sides of polygon 10.

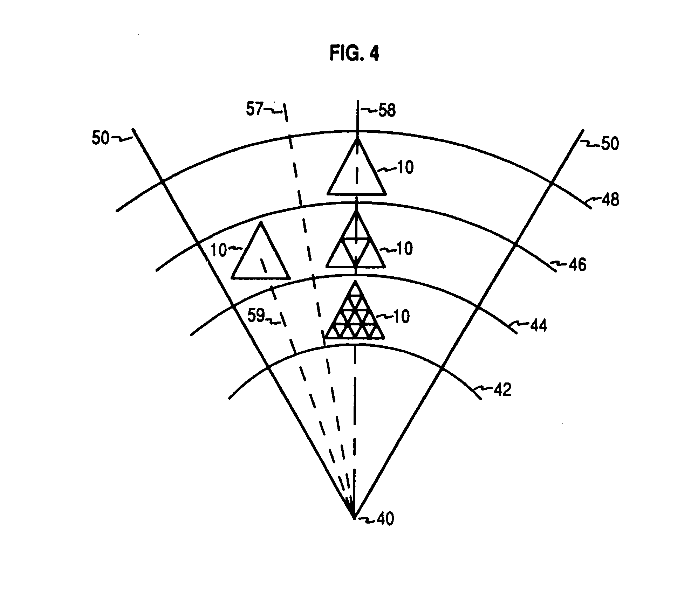

Referring to Fig. 4, a schematic diagram not necessarily to scale and including basis polygon 10 subdivided in response to predetermined ranges from a view point in accordance with the present invention is shown.

A view point 40 is the center of concentric circular range rings 42, 44, 46 and 48, each disposed at a respective greater predetermined distance from viewpoint 40. The field of view (FOV) is represented by the smaller angle subtended by the margins 50 of the FOV.

Basis polygon 10 is shown disposed between range rings 46 and 48. As basis polygon 10 moves toward viewpoint 40 and/or viewpoint 40 moves toward basis polygon 10 so that the relative position between basis polygon 30 and viewpoint 40 changes, and basis polygon 10 is disposed between range rings 44 and 46, additional detail may be required so that a first set of breakpoints for basis polygon 10 are determined. As the distance between basis polygon 10 and viewpoint 40 is further reduced so that basis polygon 10 lies between range rings 42 and 44, more additional detail is provided by determining a second set of breakpoints for the polygons created by the first set of derived vertices corresponding to the initial breakpoints of basis polygon 10 and determining a corresponding second set of derived vertices. The process of locating breakpoints and creating new vertices for augmenting the number of predetermined vertices available in a CIG system may be repeated as desired. Creation of additional scene detail in accordance with the present invention provides continuous transition between LOD's without resort to blending so that only one group of polygons is processed, thereby avoiding ambiguities and inefficiencies previously referred to.

However, even if desired, it may not be economical from the standpoint of allocating limited computing resources to generate such finer detail. For instance, if an object is beyond a predetermined distance from the viewpoint, the finer detail will not be viewable to an observer and there is no need to generate it. Thus, before finer detail is generated, basis polygon 10 is tested to determine if it lies within a predetermined functional range from viewpoint 40. If basis polygon 10 lies within the functional range, then at least one level of finer detail is allowed to be generated. For each additional level of breakup and resultant finer detail, basis polygon 10 must be within an additional closer range zone to viewpoint 40. In the alternative, an error function interval, such as one for elevation, may be used to determine when additional finer detail is required or permitted.

A source terrain data, such as the Defense Mapping Agency (DMA) supplies data covering large areas having the elevation thereof specified over a predetermined rectangular grid, typically having a spacing of 100 meters between elevation posts. It may be desired to have the elevation of the feature being displayed within a predetermined limit, or error function interval, from the actual elevation provided by the source of data. When the displayed elevation exceeds the error limit or falls outside the error interval then finer detail may be generated.

Another alternative, regardless of the source of data, is to increase the amount of detail within the scene as the angle within a view window boresight 58 and a view ray 59 to a predetermined point, such as the centroid, of basis polygon 10 decreases. Fine detail may be generated only when the angle between view window boresight 58 and view ray 59 is less than a predetermined threshold value. This would permit efficient use of computing resources when a system such as an eye-tracked area of interest display is used. As illustrated in Fig. 4, basis polygon 10 that is intersected by view ray 59 is disposed in the peripheral region outside threshold angular limit value 57 and thus is not subdivided even though it would be subdivided if a range test would be used. A combination of sub-dividing criteria may be used for determining when subdivision of basis polygon 10 is appropriate.

Convergence factor $K_r$ is used to moderate the introduction of additional detail so that the additional detail is gradually introduced into the scene as the range between viewpoint and basis polygon 10 changes to avoid a sudden appearance of additional detail into a scene.

Referring to Fig. 5, a hardware block diagram in accordance with the present invention is shown. A data base 60 has an output connected to an input of a geometry processor 70 for supplying three dimensional polygon descriptors. Processor 70 includes an output connected to an input of display processor 80 for receiving two dimensional polygon descriptors from processor 70. An output of display processor 80 is connected to a video display 85 for supplying fully processed data that is ultimately displayed by video display 85. Detailed description of the operation of these components may be had by reference to U.S. Patents 4,811,245 - Bunker et al. and 4,825,391 - Merz, which are assigned to the present applicants.

Another output of geometry processor 70 is connected to an input of breakpoint determinator circuitry 90 for receiving polygon descriptor information, while the outputs of breakpoint determinator circuitry 90 are connected to deviation circuitry 100 for supplying breakpoint data. Deviation circuitry 100 has outputs respectively connected to other inputs of geometry processor 70 for providing deviation data. The deviation data, which include coordinates of new vertices as determined in accordance with the present invention, are processed by geometry processor analogously to the information regarding polygon vertices that is received as part of the polygon descriptor data from data base 60.

Another input of breakpoint determinator 90 is connected for receiving breakpoint data. Breakpoint data include information regarding the location of a breakpoint on an edge of a polygon with respect to a vertex of the polygon. For example, breakpoint data may include information that the breakpoint is to be the midpoint of the edge, a random distance from the vertex, a periodically varying (like sinusoidal) distance from the vertex or other function that may be provided by operator input.

Deviation circuitry 100, a deviation function selector 102, first scaling means 104, second scaling means 106 and combiner means 108 are connected in series for supplying deviation factor $dx_{act}$ to combiner means 108. First and second scaling means 104 and 106 scale the value of the signal provided thereto, such as by multiplying by the constant $X_{rx}$ and $K_{sx}$, respectively. Also supplied to combiner 108 from an output of breakpoint determinator 90 is the coordinate value $X_{bp}$ of the x-coordinate of the breakpoint as determined by breakpoint determinator 90. Combiner means 108 combines, such as by adding or subtracting as selected (+/-), the value of the x-component $X_{bp}$ of the breakpoint with the actual deviation $dx_{act}$ from scaler 106 to form the x-component $X_{nv}$ of the coordinates of the new vertex 21 or 23 (Fig. 2). The output of combiner 108, which constitutes an output of deviation circuitry 100 and has the x-coordinate $X_{nv}$ of the new vertex is connected to an input of geometry processor 70. Analogous circuitry is available in deviation circuitry 100 for producing the y-coordinate $Y_{nv}$ and z-coordinate $Z_{nv}$ for new vertex 21 or 23 (Fig. 2) which are supplied to geometry processor 70.

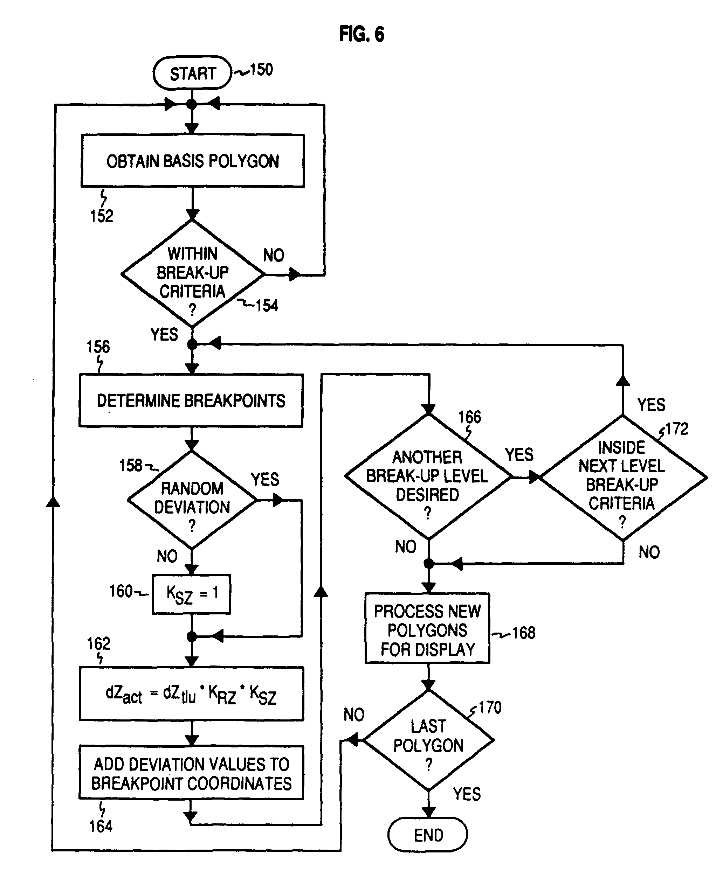

Referring to Fig. 6, a flow diagram useful for programming a general purpose computer in accordance with the present invention is shown. The program begins at step 150 and executes step 152 to obtain the vertices of the basis polygon. Performance of step 154 determines if the basis polygon is within the functional range. If it is not, the program returns to step 152. If the polygon is within the functional range, the execution of step 156 determines the breakpoints for each side of the basis polygon.

Performance of step 158 determines if random deviation is to be used. If it is not to be used then $K_{sz}$ is set equal to one (along with $K_{sx}$ and $K_{sy}$ which are also set equal to one but have not been included in the figure to avoid undue clutter) and then proceeds to step 162. If random deviation is used, the program proceeds to step 162. Execution of step 162 determines the z-coordinate deviation $dz_{act}$ of the new vertex 21 or 23 (Fig. 2). The x- and y- coordinates of a new vertex are determined analogously to z-coordinate $dz_{act}$ but are not illustrated to avoid undue clutter. Performance of step 164 adds the deviation values determined by execution of step 162 to the coordinates of the breakpoint determined at step 156 for obtaining the coordinates of the new vertex.

Execution of step 166 determines if another breakup level of the sides of the polygons defined by the vertices determined at step 164 for creating finer detail is desired. If it is not, then step 168 is performed to process the new polygons for display and execution of step 170 determines if the basis polygon being processed is the last polygon to be processed. If it is, the program ends. If it is not the last polygon, the program returns to step 152, to repeat steps 152 - 170 as described above and step 172, if required, as described below.

If another breakup level is desired when step 166 is performed, then execution of step 172 determines if the basis polygon is within the next level (closer) range ring from the range of step 154. If it is not, then step 168 is performed and processing proceeds as described above. If the basis polygon is within the next level range ring when step 172 is performed, then step 156 is executed to determine the breakpoints of the polygon defined by the vertices determined at the last performance of step 164. Steps 156-172 are repeated as required until testing at step 170 indicates that the last polygon has been processed.

Thus has been illustrated and described a method for eliminating position, attitude and collision ambiguities, bleedthrough effects, subpixel processing inefficiencies caused by having multiple polygon groups representing a single object, and other deficiencies that may be associated with prior CIG systems caused by LOD transitions during image presentation. Also shown and described is a method for creating finer detail from predefined coarser data without having to predefine and/or store most of the finer detail and without resort to translucency blending for achieving smooth LOD transition. A method for achieving smooth LOD transition by generating finer detail than is available from predefined data without having to predefine and/or store the finer detail is also illustrated and described.

## Claims

1. A method for achieving substantially continuous smooth level of detail transition in a computer image generation system wherein object features of a display image are formed by first planar polygons, each having a plurality of first vertices each designating one end point of each side of one of the first polygons, the method comprising the steps of:

   (a) retrieving from storage data determining each of the first vertices of each of the first polygons;
   (b) separating each of at least some of the first polygons into a plurality of planar second polygons, each smaller than the associated first polygon, with each second polygon having at least one second vertex which is located at a juncture formed by two sides of that second polygon and with each second vertex being different from any one of the first vertices;

(c) locating, for at least one selected one of the second vertices, a corresponding derived third vertex lying some deviational amount outside the common plane of the associated first and second polygons and different from any of the stored first vertices;

(d) displaying at least one derived planar polygon, each defined by a different combination of one of a third vertex determined in step (c) and associated ones of the first and second vertices, to create and display at least some of a sequence of scenes of a viewable image; and

(e) varying the deviational amount in a manner to display scenes having an increasing level of detail as a viewpoint nears a polygon location, and with a substantially continuous smooth level of detail transition.

2. The method of claim 1, wherein each second vertex has an elevation component associated therewith, and step (c) includes the step of locating at least one of the third vertices such that the elevation data component of that third vertex is different from the elevation data component of its associated second vertex.

3. The method of claim 2, wherein the elevation data component of the selected third vertex is greater than the elevation data component of its associated second vertex.

4. The method of claim 3, wherein the elevation data component of the selected third vertex is less than the elevation data component of its associated second vertex.

5. The method of claim 1, wherein step (b) includes the step of breaking up at least some of the first polygons into second polygons only when an angle, between an image viewpoint and both a boresight of a view window and a view ray to that one of the first polygons, is within a predetermined limit.

6. The method of claim 1, wherein each polygon is a triangle.

7. The method of claim 1, wherein the breakpoints and the derived vertices are described in a mutually-orthogonal three-axis system, and step (c) includes the steps of:

(c1) obtaining deviation value data for each breakpoint; and
(c2) combining deviation value data obtained for a particular breakpoint with data for an axis coordinate of the breakpoint to obtain data establishing the actual coordinate of the derived vertex along that same axis.

8. The method of claim 7, wherein the combining step (c2) includes the step of adding an associated deviation data value to each of at least one different one of the three axial data values of the orthogonal three-axis system used to identify breakpoint position.

9. The method of claim 7, wherein the combining step (c2) includes the step of subtracting an associated deviation data value from each of at least one different one of the three axial data values of the orthogonal three-axis system used to identify breakpoint position.

10. The method of claim 7, wherein the deviation amount is selected from the group consisting of:

predetermined constant values;
random values;
predetermined sinusoidal values;
other predetermined periodic values;
terrain geospecific values;
and a combination of these values.

11. The method of claim 1, wherein step (c) includes the step of designating each different third vertex to be a predetermined distance along a different preselected side extending from an associated preselected vertex of the basis polygon.

12. The method of claim 11, wherein the predetermined distance is selected from the group consisting of:

one-half the length of the corresponding side;
a predetermined constant distance; a random distance; and a combination of these distances.

13. The method of claim 1, wherein

step (c) further includes the step (c) of processing the total data to determine other breakpoints, each other breakpoint lying on a corresponding side of the derived polygon;
step (d) further includes the step (d') of substantially continuously modifying data for at least one of the other breakpoints to form data designating another derived vertex which lies outside the plane of both the derived polygon and the basis polygon; and
step (e) further includes the step (e') of including the other derived vertex data in the augmented vertex data.

14. The method of claim 13, wherein

step (c) is performed only when the basis polygon is within a first predetermined distance from the viewpoint; and the
step (c') of processing data to determine other breakpoints is performed only when the involved polygon is within a second predetermined distance, closer to the view point than the first predetermined distance.

15. The method of claim 1, wherein step (c) is performed only when the basis polygon is within a predetermined distance from the viewpoint.

16. The method of claim 1, wherein
    step (c) further includes the step of determining said at least one breakpoint only when an angle between a boresight of a view window and a view ray to the involved polygon, both with respect to the view point, is within a predetermined limit.

17. An augmentation method for a computer image generation system wherein object features of an image to be displayed are represented by planar basis polygons having vertices designating end points of each of a plurality of sides of the basis polygons, the method being for augmenting a total number of vertices to cause an increased number of total polygons, each with finer detail for the object features, to be displayed with substantially continuous smooth level of detail transition in viewable scenes created by the system, and comprising the steps of:

    (a) retrieving from storage vertex data defining each of a plurality of the basis polygons;
    (b) selecting a point lying within each of at least one selected one of the basis polygons and different from any vertex of the associated basis polygon;
    (c) locating a derived vertex lying at a deviation distance outside the plane of the associated basis polygon at the selected point and different from any of the stored basis polygon vertices;
    (d) forming at least one derived polygon determined by the derived vertex and at least two adjacent vertices of the associated basis polygon, responsive to the location of the associated basis polygon nearing an observer viewpoint in the image; and
    (e) displaying the derived polygon as part of the viewable image of a scene having finer feature detail along with substantially continuous smooth level of detail transition as the polygon location distance to the viewpoint decreases.

18. The method of claim 17, wherein step (e) includes the steps of:

    forming a plurality of derived polygons each including the derived vertex and a side of the associated basis polygon, with the plurality of derived polygons equal in number to the number of sides of the basis polygon;
and displaying the plurality of derived polygons to obtain the display image.

19. The method of claim 17, wherein step (b) further includes the step of selecting each basis polygon point only when an angle, formed between the image view point and both a boresight of a view window and a view ray to the basis polygon, is within a predetermined limit.

**Patentansprüche**

1. Verfahren zum Erzielen eines im wesentlichen kontinuierlichen Glattheitwertes des Detailüberganges in einem Computerbild-Erzeugungssystem, wobei Objektmerkmale von einem Display-Bild durch erste planare Polygone gebildet werden, die jeweils mehrere erste Scheitelpunkte haben, die jeweils einen Endpunkt von jeder Seite von einem der ersten Polygone bezeichnen,
   wobei das Verfahren die Schritte enthält:

    (a) Laden von Daten aus einem Speicher, die jeweils die ersten Scheitelpunkte von jedem der ersten Polygone bestimmen;
    (b) Teilen von jedem von wenigstens einigen der ersten Polygone in mehrere planare zweite Polygone, die jeweils kleiner als das zugeordnete erste Polygon sind, wobei jedes zweite Polygon wenigstens einen zweiten Scheitelpunkt hat, der an einer Verbindungsstelle angeordnet ist, die durch zwei Seiten von dem zweiten Polygon gebildet ist, und wobei jeder zweite Scheitelpunkt sich von jedem der ersten Scheitelpunkte unterscheidet;
    (c) Lokalisieren für wenigstens einen gewählten der zweiten Scheitelpunkte eines entsprechenden abgeleiteten dritten Scheitelpunktes, der um eine gewisse Abweichungsgröße außerhalb der gemeinsamen Ebene der zugeordneten ersten und zweiten Polygone liegt und sich von jedem der gespeicherten ersten Scheitelpunkte unterscheidet;
    (d) Bildliche Darstellung von wenigstens einem abgeleiteten planaren Polygon, das jeweils durch eine unterschiedliche Kombination von einem von einem dritten Scheitelpunkt, der durch den Schritt (c) bestimmt ist, und zugeordneter erster und zweiter Scheitelpunkte definiert ist, um wenigstens einige von einer Sequenz von Szenen von einem betrachtbaren Bild zu erzeugen und bildlich darzustellen; und
    (e) Verändern der Abweichungsgröße in einer Weise, um Szenen mit einem zunehmenden Detailpegel, wenn sich ein Betrachtungspunkt einem Polygonort nähert und mit einem im wesentlichen kontinuierlichen Glattheitspegel des Detailüberganges bildlich darzustellen.

2. Verfahren nach Anspruch 1, wobei jedem zweiten Scheitelpunkt eine Höhenkomponente mit zugeordnet ist, und der Schritt (c) den Schritt enthält, daß wenigstens einer der dritten Scheitelpunkte derart lokalisiert wird, daß die Höhendatenkomponente von diesem dritten Scheitelpunkt sich von der Höhendatenkomponente seines zugeordneten zweiten Scheitelpunktes unterscheidet.

3. Verfahren nach Anspruch 2, wobei die Höhendatenkomponente von dem gewählten dritten Scheitelpunkt größer ist als die Höhendatenkomponente von seinem zugeordneten zweiten Scheitelpunkt.

4. Verfahren nach Anspruch 3, wobei die Höhendatenkomponente von dem gewählten dritten Scheitelpunkt kleiner ist als die Höhendatenkomponente von seinem zugeordneten zweiten Scheitelpunkt.

5. Verfahren nach Anspruch 1, wobei der Schritt (b) den Schritt enthält, daß wenigstens einige der ersten Polygone nur dann in zweite Polygone aufgebrochen werden, wenn ein Winkel zwischen einem Bildsichtpunkt und sowohl einer Bezugslinie von einem Sichtfenster als auch einem Sichtstrahl zu dem einen der ersten Polygone innerhalb einer vorbestimmten Grenze ist.

6. Verfahren nach Anspruch 1, wobei jedes Polygon ein Dreieck ist.

7. Verfahren nach Anspruch 1, wobei die Schnittpunkte und die abgeleiteten Scheitelpunkte in einem zueinander orthogonalen Dreiachsensystem beschrieben sind, und der Schritt (c) die Schritte enthält:

(c1) Erhalten von Abweichungswertdaten für jeden Schnittpunkt und
(c2) Verknüpfen von Abweichungswertdaten, die für einen bestimmten Schnittpunkt erhalten sind, mit Daten für eine Achskoordinate des Schnittpunktes, um Daten zu erhalten, die die tatsächliche Koordinate des abgeleiteten Scheitelpunktes entlang dieser gleichen Achse festlegen.

8. Verfahren nach Anspruch 7, wobei der Verknüpfungsschritt (c2) den Schritt enthält, daß ein zugeordneter Abweichungsdatenwert zu jedem der wenigsten einen unterschiedlichen dreiachsigen Datenwerte des orthogonalen Dreiachsensystems hinzuaddiert wird, das zum Identifizieren des Schnittpunktortes verwendet ist.

9. Verfahren nach Anspruch 7, wobei der Verknüpfungsschritt (c2) den Schritt enthält, daß ein zugeordneter Abweichungsdatenwert von jedem der wenigsten einen unterschiedlichen dreiachsigen Datenwerte des orthogonalen Dreiachsensystems subtrahiert wird, das zum Identifizieren eines Schnittpunktortes verwendet wird.

10. Verfahren nach Anspruch 7, wobei die Abweichungsgröße aus der Gruppe ausgewählt wird, die besteht aus:

vorbestimmte konstante Werte,
Zufallswerte,
vorbestimmte Sinuswerte,
andere vorbestimmte periodische Werte,
geospezifische Terrainwerte,
und eine Kombination dieser Werte.

11. Verfahren nach Anspruch 1, wobei der Schritt (c) den Schritt enthält, daß jeder unterschiedliche dritte Scheitelpunkt als ein vorbestimmter Abstand entlang einer unterschiedlichen vorgewählten Seite bezeichnet wird, die von einem zugeordneten vorgewählten Scheitelwert des Basispolygons ausgeht.

12. Verfahren nach Anspruch 11, wobei der vorbestimmte Abstand aus der Gruppe ausgewählt wird, die besteht aus:

eine halbe Länge der entsprechenden Seite,
ein vorbestimmter konstanter Abstand,
ein zufälliger Abstand,
und eine Kombination dieser Abstände.

13. Verfahren nach Anspruch 1, wobei

der Schritt (c) ferner den Schritt (c') enthält, daß die gesamten Daten bearbeitet werden, um andere Schnittpunkte zu bestimmen, wobei jeder andere Schnittpunkt auf einer entsprechenden Seite des abgeleiteten Polygons liegt,
der Schritt (d) ferner den Schritt (d') enthält, daß Daten für wenigstens einen der anderen Schnittpunkte im wesentlichen kontinuierlich modifiziert werden, um Daten zu bilden, die einen anderen abgeleiteten Scheitelpunkt bezeichnen, der außerhalb der Ebene von sowohl dem abgeleiteten Polygon als auch dem Basispolygon liegt, und
der Schritt (e) ferner den Schritt (e') enthält, daß die anderen abgeleiteten Scheitelpunktdaten in die vermehrten Scheitelpunktdaten eingeschlossen werden.

**14.** Verfahren nach Anspruch 13, wobei

der Schritt (c) nur ausgeführt wird, wenn das Basispolygon innerhalb eines ersten vorbestimmten Abstandes von dem Sichtpunkt ist; und
der Schritt (c') des Verarbeitens von Daten, um andere Schnittpunkte zu ermitteln, nur ausgeführt wird, wenn das involvierte Polygon innerhalb eines zweiten vorbestimmten Abstandes ist, der näher zu dem Betrachtungspunkt als der erste vorbestimmte Abstand ist.

**15.** Verfahren nach Anspruch 1, wobei der Schritt (c) nur ausgeführt wird, wenn das Basispolygon innerhalb eines vorbestimmten Abstandes von dem Betrachtungspunkt ist.

**16.** Verfahren nach Anspruch 1, wobei
der Schritt (c) den Schritt enthält, daß der wenigstens eine Schnittpunkt nur ermittelt wird, wenn ein Winkel zwischen einer Bezugslinie von einem Sichtfenster und einem Sichtstrahl zu dem involvierten Polygon, beide in Bezug auf den Betrachtungspunkt, innerhalb einer vorbestimmten Grenze ist.

**17.** Vermehrungsverfahren für ein Computerbild-Erzeugungssystem, wobei Objektmerkmale von einem bildlich darzustellenden Bild durch planare Basispolygone mit Scheitelpunkten dargestellt werden, die Endpunkte von jeder von mehreren Seiten des Basispolygons bezeichnen, wobei das Verfahren zum Vermehren einer Gesamtzahl von Scheitelpunkten vorgesehen ist, damit eine erhöhte Anzahl von Gesamtpolygonen, jeweils mit feineren Details für die Objektmerkmale, mit einem im wesentlichen kontinuierlichen Glattheitswert des Detailüberganges in betrachtbaren Szenen dargestellt werden, die durch das System hervorgerufen werden, und die Schritte enthaltend:

(a) Laden von Scheitelpunktwerten aus einem Speicher, die jeweils mehrere der Basispolygone definieren;
(b) Wählen eines Punktes, der innerhalb jedes von wenigstens einem gewählten der Basispolygone liegt und von jedem Scheitelpunkt des zugeordneten Basispolygons unterschiedlich ist;
(c) Lokalisieren eines abgeleiteten Scheitelpunktes, der in einem Abweichungsabstand außerhalb der Ebene des zugeordneten Basispolygons an dem gewählten Punkt liegt und von jedem der gespeicherten Basispolygon-Scheitelpunkte unterschiedlich ist;
(d) Formen von wenigstens einem abgeleiteten Polygon, das durch den abgeleiteten Scheitelpunkt und wenigstens zwei benachbarten Scheitelpunkten des zugeordneten Basispolygons bestimmt ist, als Antwort auf die Lage des zugeordneten Basispolygons, das sich einem Betrachter-Betrachtungspunkt in dem Bild nähert; und
(e) Bildliches Darstellen des abgeleiteten Polygons als Teil des betrachtbaren Bildes von einer Szene, das feinere Merkmaldetails zusammen mit einem im wesentlichen kontinuierlichen Glattheitswert des Detailüberganges hat, wenn der Abstand des Polygonortes zu dem Betrachtungspunkt kleiner wird.

**18.** Verfahren nach Anspruch 17, wobei der Schritt (e) die Schritte enthält:

Formen mehrerer abgeleiteter Polygone, die jeweils den abgeleiteten Scheitelpunkt und eine Seite des zugeordneten Basispolygons enthalten, wobei die mehreren abgeleiteten Polygone zahlenmäßig gleich der Anzahl von Seiten des Basispolygons sind;
und bildliches Darstellen der mehreren abgeleiteten Polygone, um das Display-Bild zu erhalten.

**19.** Verfahren nach Anspruch 17, wobei der Schritt (b) ferner den Schritt enthält, daß jeder Basispolygonpunkt nur ausgewählt wird, wenn ein Winkel, der zwischen dem Bildbetrachtungspunkt und sowohl einer Bezugslinie von einem Sichtfenster als auch einem Sichtstrahl zu dem Basispolygon gebildet ist, innerhalb einer vorbestimmten Grenze ist.

**Revendications**

**1.** Procédé pour obtenir une transition de niveau de détail régulière et sensiblement continue dans un système de production d'images par ordinateur dans lequel les particularités des objets d'une image affichée sont formées par des premiers polygones plans, ayant tous une pluralité de premiers sommets dont chacun représente un point d'extrémité de chaque côté de l'un des premiers polygones, le procédé comprenant les étapes consistant à :

(a) retrouver dans une mémoire des données déterminant chacun des premiers sommets de chacun des premiers polygones,
(b) partager chacun de certains au moins des premiers polygones en une pluralité de seconds polygones plans, tous plus petits que le premier polygone associé, chaque second polygone ayant au moins un deuxième sommet qui est placé à la jonction formée par deux côtés de ce second polygone et chaque deuxième sommet étant différent de n'importe lequel des premiers sommets,

(c) placer, pour l'un au moins sélectionné des deuxièmes sommets, un troisième sommet dérivé correspondant, situé à une certaine valeur d'écart à l'extérieur du plan commun des premiers et deuxièmes polygones associés et différent de n'importe lequel des premiers sommets mémorisés,

(d) afficher au moins un polygone plan dérivé, tous définis par une combinaison différente de l'un des troisièmes sommets déterminés à l'étape (c) et de ceux associés des premiers et deuxièmes sommets, pour créer et afficher certaines au moins des scènes d'une séquence de scènes d'une image visible, et

(e) faire varier la valeur d'écart de manière à afficher des scènes ayant un niveau de détail croissant à mesure que le point d'observation s'approche de l'emplacement d'un polygone, et avec une transition de niveau de détail régulière et sensiblement continue.

2. Procédé selon la revendication 1, dans lequel chaque deuxième sommet a une composante d'élévation qui lui est associée et l'étape (c) comprend l'étape consistant à placer l'un au moins des troisièmes sommets de telle sorte que la donnée de composante d'élévation de ce troisième sommet soit différente de la donnée de composante d'élévation de son deuxième sommet associé.

3. Procédé selon la revendication 2, dans lequel la donnée de composante d'élévation du troisième sommet sélectionné est supérieure à la donnée de composante d'élévation de son deuxième sommet associé.

4. Procédé selon la revendication 3, dans lequel la donnée de composante d'élévation du troisième sommet sélectionné est inférieure à la donnée de composante d'élévation de son deuxième sommet associé.

5. Procédé selon la revendication 1, dans lequel l'étape (b) comprend l'étape consistant à casser certains au moins des premiers polygones en des deuxièmes polygones uniquement lorsque l'angle, formé entre un point d'observation de l'image et à la fois un point de visée d'une fenêtre d'observation et un rayon d'observation allant vers ledit premier polygone, se trouve dans des limites prédéterminées.

6. Procédé selon la revendication 1, dans lequel chaque polygone est un triangle.

7. Procédé selon la revendication 1, dans lequel les points de cassure et les sommets dérivés sont décrits dans un référentiel à trois axes mutuellement orthogonaux et l'étape (c) comprend les étapes consistant à :

$(c_1)$ obtenir des données de valeur d'écart pour chaque point de cassure, et

$(c_2)$ combiner la donnée de valeur d'écart obtenue pour un point de cassure particulier avec une donnée correspondant à une coordonnée d'axe du point de cassure afin d'obtenir une donnée établissant la coordonnée réelle du sommet dérivé le long de ce même axe.

8. Procédé selon la revendication 7, dans lequel l'étape de combinaison $(c_2)$ comprend l'étape consistant à ajouter une valeur de donnée d'écart associée à chacune d'au moins une valeur de donnée différente des trois valeurs de données axiales du référentiel à trois axes orthogonaux utilisées pour identifier la position du point de cassure.

9. Procédé selon la revendication 7, dans lequel l'étape de combinaison $(c_2)$ comprend l'étape consistant à soustraire une valeur de donnée d'écart associée à chacune d'au moins une valeur de donnée différente des trois valeurs de données axiales du référentiel à trois axes orthogonaux utilisées pour identifier la position du point de cassure.

10. Procédé selon la revendication 7, dans lequel la valeur d'écart est choisie dans le groupe comprenant :

- des valeurs constantes prédéterminées,
- des valeurs aléatoires,
- des valeurs sinusoïdales prédéterminées,
- d'autres valeurs périodiques prédéterminées,
- des valeurs géospécifiques de terrain, et
- une combinaison de ces valeurs.

11. Procédé selon la revendication 1, dans lequel l'étape (c) comprend l'étape consistant à assigner à chaque troisième sommet différent une distance prédéterminée le long d'un côté présélectionné différent partant d'un sommet présélectionné associé du polygone de base.

12. Procédé selon la revendication 11, dans lequel la distance prédéterminée est choisie dans le groupe comprenant :

- la moitié de la longueur du côté correspondant,
- une distance constante prédéterminée,
- une distance aléatoire, et
- une combinaison de ces valeurs.

13. Procédé selon la revendication 1, dans lequel :

- l'étape (c) comprend en outre l'étape (c') consistant à traiter les données totales pour déterminer d'autres points de cassure, chaque autre point de cassure se trouvant sur un côté correspondant du polygone dérivé,
- l'étape (d) comprend en outre l'étape (d') consistant à modifier de manière sensiblement continue les données pour l'un au moins des autres points de cassure afin de former des données désignant un autre sommet dérivé qui est placé à l'extérieur du plan des deux polygones, le polygone dérivé et le polygone de base, et
- l'étape (e) comprend en outre l'étape (e') consistant à inclure les autres données de sommet dérivé dans les données de sommet augmentées.

14. Procédé selon la revendication 13, dans lequel :

- l'étape (c) n'est effectuée que lorsque le polygone de base est dans les limites d'une première distance prédéterminée par rapport au point d'observation, et
- l'étape (c') de traitement des données pour déterminer d'autres points de cassure n'est effectuée que lorsque le polygone considéré est dans les limites d'une deuxième distance prédéterminée, plus proche du point d'observation que la première distance prédéterminée.

15. Procédé selon la revendication 1, dans lequel l'étape (c) n'est effectuée que lorsque le polygone de base est dans les limites d'une distance prédéterminée par rapport au point d'observation.

16. Procédé selon la revendication 1, dans lequel l'étape (c) comprend en outre l'étape consistant à déterminer ledit point de cassure au nombre d'au moins un uniquement lorsque l'angle entre un point de visée d'une fenêtre d'observation et un rayon d'observation allant vers le polygone impliqué, tous deux par rapport au point d'observation, est dans des limites prédéterminées.

17. Procédé d'augmentation pour un système de production d'images par ordinateur dans lequel les particularités des objets d'une image à afficher sont représentées par des polygones de base plans, ayant des sommets qui représentent des points d'extrémité de chaque côté d'une pluralité de côtés des polygones de base, le procédé servant à augmenter le nombre total de sommets pour provoquer une augmentation du nombre total de polygones, tous avec un détail plus fin des particularités des objets, devant être affichés avec une transition de niveau de détail régulière et sensiblement continue dans des scènes visibles produites par le système, et comprenant les étapes consistant à :

(a) retrouver dans une mémoire des données de sommets définissant chacun des polygones de base de la pluralité,

(b) choisir un point situé dans chacun d'au moins un polygone de base sélectionné et différent de n'importe lequel des sommets du polygone de base associé,

(c) placer un sommet dérivé situé à une certaine distance d'écart à l'extérieur du plan du polygone de base associé au niveau du point sélectionné et différent de n'importe lequel des sommets des polygones de base mémorisés,

(d) former au moins un polygone dérivé, déterminé par le sommet dérivé et au moins deux sommets adjacents du polygone de base associé, en réponse au fait que la position du polygone de base associé s'approche d'un point d'observation dans l'image, et

(e) afficher le polygone dérivé comme une partie de l'image visible d'une scène ayant un niveau de détail des particularités plus fin et une transition de niveau de détail régulière et sensiblement continue à mesure que la distance entre la position du polygone et le point d'observation diminue.

18. Procédé selon la revendication 17, dans lequel l'étape (e) comprend les étapes consistant à :

- former une pluralité de polygones dérivés, contenant tous le sommet dérivé et un côté du polygone de base associé, le nombre de polygones dérivés de la pluralité étant égal au nombre de côtés du polygone de base, et
- afficher la pluralité de polygones dérivés pour obtenir l'image affichée.

19. Procédé selon la revendication 17, dans lequel l'étape (b) comprend en outre l'étape consistant à choisir chaque point du polygone de base uniquement quand l'angle, formé entre un point d'observation de l'image et à la fois un point de visée d'une fenêtre d'observation et un rayon d'observation allant vers ledit polygone de base, se trouve dans des limites prédéterminées.

# FIG. 1

# FIG. 2

# FIG. 3A

# FIG. 3B

FIG. 4

FIG. 5

EP 0 408 232 B1

**FIG. 6**